# EUROPEAN PATENT SPECIFICATION

(11) **EP 2 452 404 B1**
(45) Date of publication and mention of the grant of the patent: **20.07.2016**
(21) Application number: 10725554.9
(22) Date of filing: 26.05.2010
(51) Int. Cl.: H01R 13/52

(54) **SEALING MEMBER**
DICHTUNGSTEIL
ÉLÉMENT D'OBTURATION

(30) Priority: 10.07.2009 US 224664 P
(43) Date of publication of application: 16.05.2012
(73) Proprietor: 3M Innovative Properties Company, St. Paul, MN 55133-3427 (US)
(72) Inventor: DESARD, Christophe, 95006 Cergy Pontoise Cedex (FR)
(74) Representative: Müller, Bruno
(86) International application number: PCT/US2010/036168
(87) International publication number: WO 2011/005371

(56) References cited:
- WO-A1-2006/108609
- DE-B3-102007 012 755
- FR-A1- 2 866 485
- US-A1- 2006 148 287

## Description

### The Field of the Invention

The present invention generally relates to a sealing member for use in sealing around telecommunication cables that pass through an opening in the sealing member. The sealing member can be configured with integrally formed plugs blocking the openings through the sealing member.

### Background of the Invention

Cables, such as telecommunication cables and electrical power distribution cables, are ubiquitous and used for distributing electrical power and all manner of data signals across vast networks. The majority of cables are electrically conductive cables (typically copper), although the use of optical fiber cables is growing rapidly in telecommunication systems as larger and larger amounts of data are transmitted. As cables are routed across power or data networks, it is necessary to periodically open, connect, or splice the cable so that power or data may be distributed to other cables or "branches" of the network. The cable branches may be further distributed until the network reaches individual homes, businesses, offices, and so on.

At each point where the cable is opened, it is necessary to provide some type of protection for the exposed interior of the cable. Commonly, an enclosure is used that has one or more ports through which cables enter and/or exit the enclosure. For ease of description, the ports are generally referred to herein "entry ports". However, it is understood and intended that the term "entry port" includes any and all ports through which cables or other members enter and/or exit the enclosure. Depending upon the number of entry ports in the enclosure, the sizes of the entry ports, the number of cables entering the enclosure, and the sizes of the cables, the number of cables passing through each entry port will vary. Often, when smaller diameter cables are used in distributed lines, multiple cables are bundled for placement into a single larger entry port. This is particularly common where multiple smaller cables are routed from a single point to multiple locations, such as individual homes, buildings, offices, etc.

Regardless of the number of cables passing through each entry port, it is often desirable or necessary to provide a seal around the cables to prevent the ingress of moisture, dust, insects, and the like into the enclosure.

U.S. Patent Application US2006/0148287 A1 describes an electrical connector with cable-receiving passageways. The connector comprises an insulating boot that may be received in tubular cable inlets. The boot can have a boot closure cap and an integrally molded tether connecting the removable boot closure cap to a tubular sidewall of the boot.

Current methods of providing a seal around the cables typically involve bundling cables with mastic materials, rubber-like tapes, self-vulcanizing tapes, gels, potting compounds, and the like. Such sealing methods are replete with disadvantages. The quality of the resulting seal is highly dependent upon the skill of the installer, and the reliability of the seal is therefore typically inconsistent from one installer to another. Further, as the number of cables increases, it becomes more and more difficult to form a reliable seal. Many of the technologies used to form a seal can also present difficulties when it is desired to re-enter the enclosure, such as when adding or removing cables in the entry port. Specifically, the old sealing materials must be removed without damaging the cables, and a new seal must be constructed. The removal and reconstruction of the seal requires the use of additional time and materials, and therefore adds to the cost of maintaining or expanding the network.

To address the disadvantages of seals formed with mastic, rubber-like tape, and the like as described above, pre-formed grommets have been used to expand the capacity of entry ports in an enclosure. Typically, the grommets are sized to fit within an enclosure entry port, and have a predetermined number of holes for accepting smaller diameter cables. The cables are threaded through the holes in the grommet, and the grommet is in turn secured within the entry port. Existing grommet sealing devices also have disadvantages. When a grommet is not fully populated with cables the remaining openings must be blocked with separate plug elements to ensure the integrity of the seal of the enclosure. Because every installation is different, the number of plugs needed for the job will vary and this can result in extra parts which must be discarded. In addition, handling and keeping track of many individual small plugs which can be difficult when doing either aerial or underground installations.

A need exists for a sealing member that enables an installer to produce a reliable seal regardless of the number of cables installed through the sealing member. The sealing member should also allow subsequent addition of one or more new cables through the entry port without disturbing the previously installed cables. Finally, a need exists for a seal that can be easily and quickly installed, and that can be easily re-entered and re-used multiple times without seal degradation.

### SUMMARY OF THE INVENTION

In one aspect, the invention described herein provides a sealing member for use in an entry port of an enclosure. The sealing member has a body portion including at least one opening extending through the body portion from a first end of the sealing member to a second end of the sealing member and at least one plug formed integrally with the body portion to block the at least one opening. The at least one plug is connected to the body portion by a thin web within the at least one opening and extends beyond a surface of the body portion. The at least one plug can be removed so that a cable may be inserted through the at least one opening in the sealing member.

In another aspect, the sealing member can be used in conjunction with an inlet device. The inlet device includes a housing and an exemplary sealing member. The sealing member is disposed at least partially within the housing to provide sealing engagement between the inlet device and a cable passing through the sealing member. Additionally, the inlet device can include an external sealing member disposed on the surface of the housing to provide sealing engagement between the inlet device and a port of a telecommunication enclosure.

In yet another aspect, the sealing member can be used in a port of a telecommunication enclosure. The enclosure includes a cover, a base, and a pliable gasket. The pliable gasket can line an entry port in the telecommunication enclosure and the sealing member can be sealingly engaged with the pliable gasket in the entry port of the enclosure.

### BRIEF DESCRIPTION OF THE DRAWINGS

The present invention will be further described with reference to the accompanying drawings, wherein:
Figs. 1A-1C show several embodiments of exemplary sealing members according to an aspect of the present invention; Fig. 1D shows a cross sectional view of the sealing member shown in Fig. 1A; Fig. 1E shows a cross sectional view of the sealing member shown in Fig. 1B; Fig. 1F shows a cross sectional view of another exemplary sealing members according to an aspect of the present invention;
Fig. 2 is an isometric view showing the removal of a plug from the sealing member shown in Fig. 1A;
Fig. 3A is an isometric view of an inlet device which is fully populated with cables that is useable in conjunction with the sealing member of the present invention; Fig 3B is an exploded sectional view of the inlet device shown in Fig. 3A having only a single cable passing therethrough; and
Fig. 4 is an exploded perspective view of a telecommunication enclosure having a plurality of entry ports, and a sealing member according to one aspect of the invention.

While the invention is amenable to various modifications and alternative forms, specifics thereof have been shown by way of example in the drawings and will be described in detail. It should be understood, however, that the intention is not to limit the invention to the particular embodiments described. On the contrary, the intention is to cover all modifications, equivalents, and alternatives falling within the scope of the invention as defined by the appended claims.

### DETAILED DESCRIPTION OF THE DRAWINGS

In the following detailed description of the preferred embodiments, reference is made to the accompanying drawings, which form a part hereof, and in which is shown by way of illustration specific embodiments in which the invention may be practiced. The illustrated embodiments are not intended to be exhaustive of all embodiments according to the invention. It is to be understood that other embodiments may be utilized and structural or logical changes may be made without departing from the scope of the present invention. The following detailed description, therefore, is not to be taken in a limiting sense, and the scope of the present invention is defined by the appended claims.

For purposes of clarity, the invention is described herein as used with cables. However, such use is exemplary only, and the term "cable" as used herein is understood and intended to include any member or component that passes through an entry port in an enclosure, including but not limited to telecommunication cables, electrical power cables, optical fiber cables, copper wire cables, coaxial cables, drop lines, branch lines, distribution lines, pipes and conduits, to name a few.

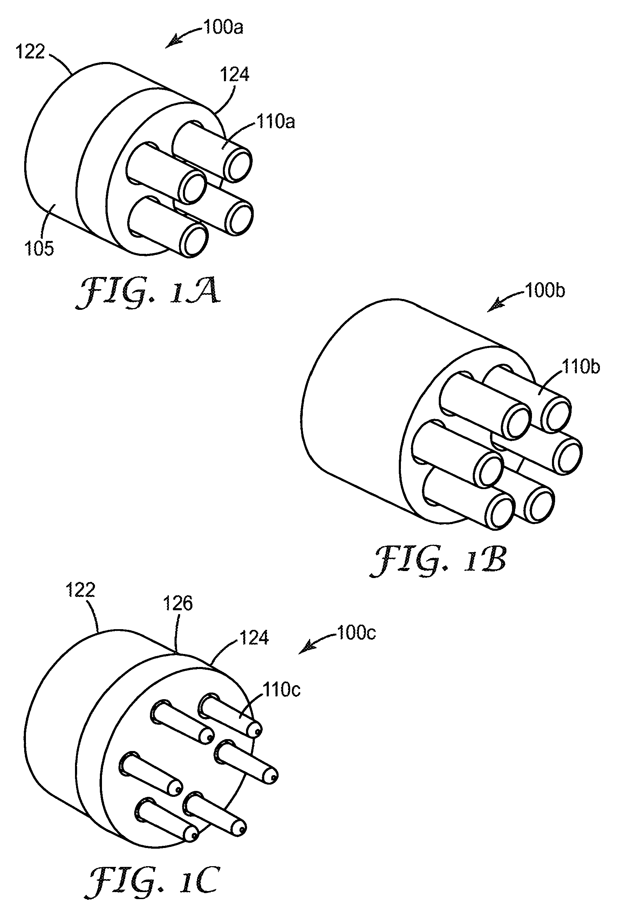

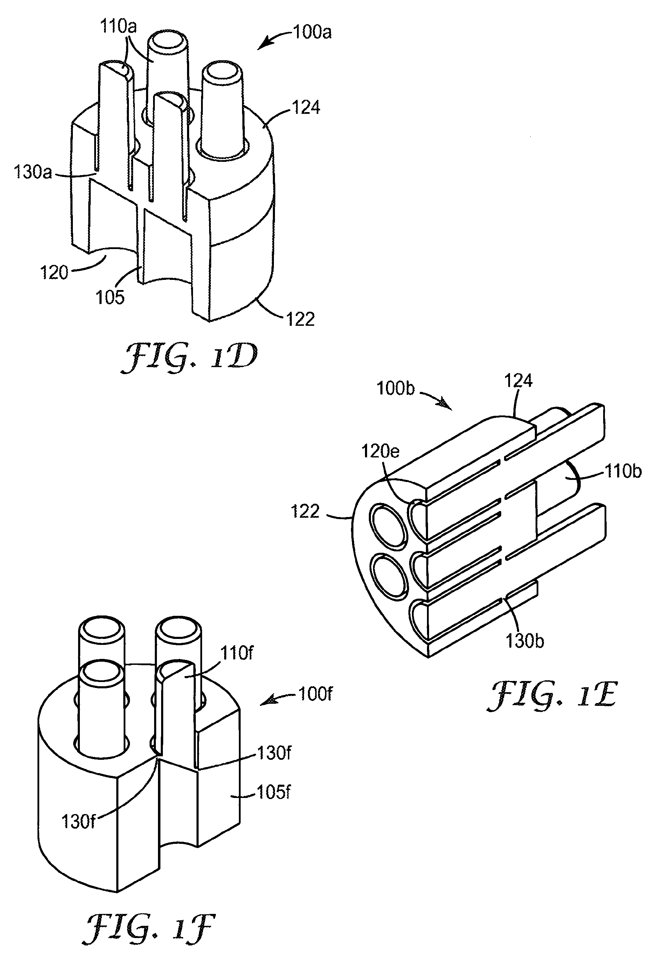

Figs. 1A-1C show three exemplary embodiments of sealing members 100a-100c having integrally formed plugs 110a-110c. The details of an exemplary sealing member 100a will be described with respect to Figs. 1A and 1D. Sealing member 100a has four openings 120 passing through a body portion 105 of the sealing member. Each opening 120 can have an integrally formed plug 110a disposed within the opening. Each opening can extend from a first end 122 to a second end 124 of body portion 105 to accommodate insertion of up to four cables (not shown) therethrough. One cable may be inserted through each opening 120 in sealing member 100a once plug 110a is removed from the opening.

The size and shape of the openings through body portion 105 of sealing member 100a may be altered to accommodate other types of optical fiber drop cables such as flat drop cables and round drop cables. Figs. 1A, 1D and 1F show an exemplary sealing member having four openings while Figs. 1B, 1C and 1E show exemplary sealing members having six openings. The sealing members shown in these figures are by means of example for purpose of illustrating the invention. Exemplary sealing members can include as few as a single opening and as many as is practical given the size of the sealing member and the size and shape of cables to be inserted through the sealing member.

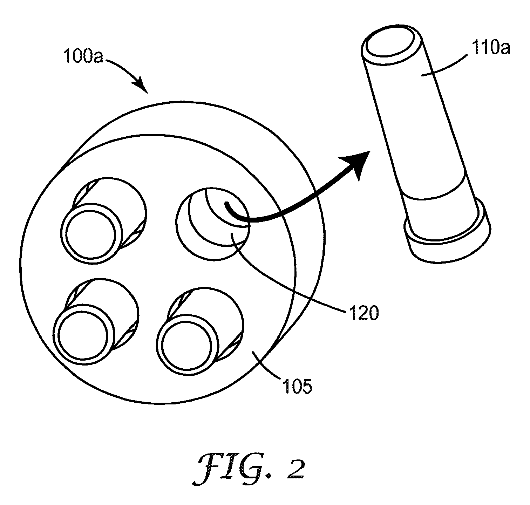

Referring to Fig. 2, plugs 110a can be removed from the openings 120 when a cable is to be inserted into the sealing member 100a. In this way, the openings remain closed until such time as a cable is installed therein. Thus, some number of cables less than the number of openings in the internal sealing member may be installed through internal sealing member 100a during initial installation and additional cables can be added when additional service connections are needed at a later time by simply tearing out or otherwise removing one or more of plugs 110a from sealing member 100a. Plug 110a is integrally formed with the body portion of sealing member 100a. Plug 110a may be held within sealing member 100a by a thin web section 130a (Fig. 1D) which can be easily torn when the craftsman pulls on the plug in order to remove it from the sealing member. The thin web section 130a and plug 110a ensures the environmental sealing of the sealing member 100a when a cable is not inserted through a given opening 120. In an exemplary aspect, the web section can be joined substantially perpendicular to the plug and the body portion within opening 120 as shown in Fig. 1D. In an alternative aspect as shown in Fig. 1F, the web section 130f can be joined to at least one of the plug 110f and the body portion 105f at an acute angle to facilitate removal of the plug. Optionally, a portion of web 130f may be located flush with a surface of the body portion 105f to facilitate removal of the plug 110f such as by snipping the web with a pair of scissors or other tool.

The plugs 110a can have a general hat shape such that the plug extends in one direction from the thin web 130a as shown in Fig. 1D. In an alternative embodiment shown in Fig. 1E, the plug 110b may extend from both directions of the thin web 130b. Thus, plug 110b shown in Fig. 1E substantially fills the opening 120e that extends from the first end 122 to the second end 124 of body portion 105 of sealing member 100b. In this latter exemplary embodiment, the plugs 110b can provide added stability and support to sealing member 100b when installed in an inlet device or enclosure prior installation of cables through the sealing member.

In one exemplary embodiment, it may be desirable to install the exemplary sealing member having into an inlet device or an enclosure. Using the exemplary sealing member enables the installation of a number of cables less than the number of openings present in the internal sealing member. In order to install cables through the exemplary sealing member, the plug closing the opening through the sealing member must be removed by tearing the thin web which joins the plug to the sealing member.

For example when two cables are to be installed through the sealing member, two of the plugs can be removed. The two cables can be inserted through the now clear openings. The remaining openings are still closed by the remaining plugs ensuring a good environmental seal when installed in a port of an enclosure or other device. When an additional cable is needed, for example an additional service connection, one of the remaining plugs can be removed to allow insertion of the new cable.

The sealing member can have a constant outer diameter as shown in Figs. 1A and 1B or it can have a stepped outer diameter as shown in Fig. 1C. In Fig. 1C, the sealing member 100c has a first diameter at the first end 122, a second diameter at the second end 124 of the internal sealing member, and a step transition 126 between the first and second ends. The stepped external profile can be advantageous in some applications to prevent the sealing member from slipping inside a port of an enclosure or a device. The size and shape of the openings may be altered to accommodate other types of optical fiber drop cables such as flat drop cables and round drop cables.

Sealing member 100a-100c may be formed from, for example, elastomeric and polymeric materials, such as thermoplastic elastomers, vulcanite rubbers, polyurethane foams, reactive and non-reactive polymers, and soft plastics, to name a few. Material selection will depend upon factors including, but not limited to, material durometer, chemical and environmental exposure conditions including temperature and humidity conditions, and flame-retardancy requirements, to name a few. In a preferred embodiment, the material of sealing member is an elastomeric material that deforms sufficiently to allow openings to form a resilient seal against cables 50. In one embodiment, the material can have a hardness in the range of 20 to 90 durometer (Shore 'A'). In an alternative embodiment, the material can have a hardness in the range of 40 to 60 durometer (Shore 'A').

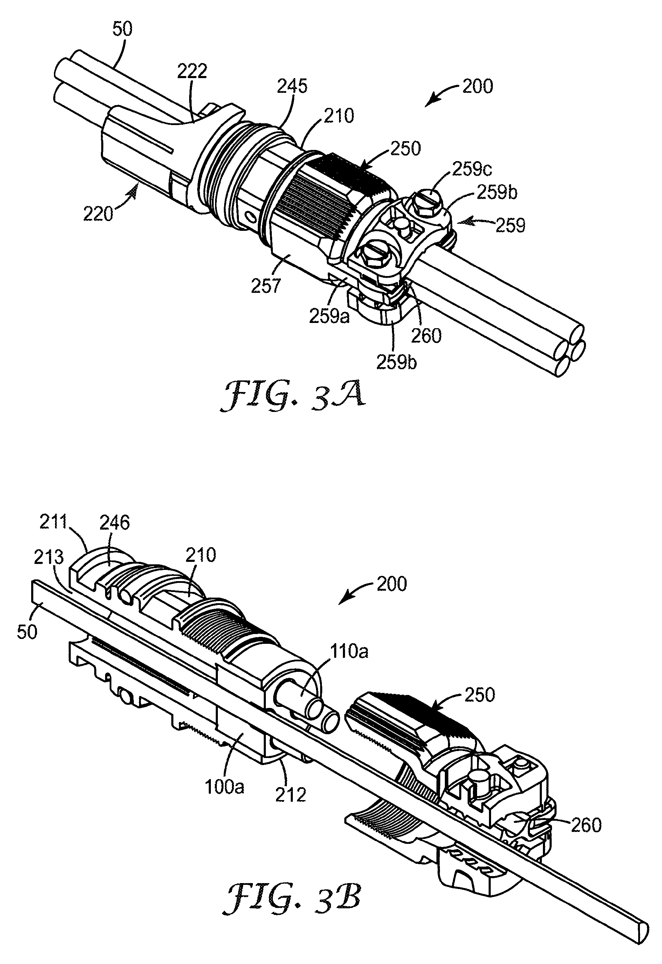

In one exemplary aspect, it may be desirable to use an exemplary sealing member 100a in an inlet device 200 as shown in Figs 3A and 3B. Fig. 3A shows an inlet device 200 which is fully populated with cables, such as telecommunication cables 50 that is useable in conjunction with the sealing member of the present invention, and Fig. 3B shows an exploded sectional view of inlet device 200 having only a single cable passing through exemplary sealing member 100a.

In this exemplary aspect, sealing member 100a provides an interior seal within inlet device 200 between the cable(s) and the inlet device. The exemplary inlet device 200 that is usable with sealing member 100a includes a housing 210 having a first end 211 and a second end 212, the internal sealing member 100a shaped to be received within the second end of the housing, a compression member attachable to the second end of the housing and a securing mechanism disposed at the first end of the inlet device. The compression member may be a clamping nut 250 or device capable of applying a compression force to the second end of the inlet device housing 210 to ensure the sealing of sealing member 100a. The inlet device 200 may be formed of plastic by conventional methods, for example by injection molding.

The housing may be generally cylindrical in shape and includes an interior passageway 213 that extends along the length of the housing from the first end 211 to the second end 212 of the housing. The interior passageway that may be configured to accommodate certain categories of telecommunication cables including one or more single fiber drop cables, multi-fiber cables, copper communication cables or coax cables.

The housing 210 can have an external threaded portion (not shown) located near the second end 212 of the housing 210. The external threaded portion cooperates with a corresponding internal threaded portion of the clamping nut 250 to compress sealing member 100a within housing 210 to hold the cables installed therein.

In addition, the inlet device can have an external sealing member 245 such as an o-ring disposed within a groove in the outer surface of housing 210. This external sealing member 245 can provide an environmental seal between the inlet device 200 and a port of a telecommunication enclosure when the inlet device is fully seated therein.

The cable clamping nut 250, shown in Fig. 3A, has an internal threaded portion that corresponds to and is engagable with the external threaded portion on the housing 210 of inlet device 200 to allow the cable clamping nut 250 to be secured to the housing. In an exemplary aspect, clamping nut 250 can have a gripping surface 257 on the external surface of the cable clamping nut that corresponds to the position of the internal threaded portion. The external gripping surface 257 may be a hexagonally shaped cross-section as shown in Fig. 3A to facilitate gripping of the cable securing device with a tool or by hand. The gripping surface region may have other geometric configurations such as a circular cross-section, a rectangular cross-section or other polygonal cross-section. Additionally, the gripping surface may be textured (e.g. a ridged or cross-hatched texture) to further facilitate gripping of the cable securing device.

Clamping nut 250 can include a retaining clamp 259 to securely hold one or more telecommunication cables 50. Two longitudinal side tabs 259a project from the clamping nut 250. Two halves 259b of retaining clamp 259 may be secured to the longitudinal side tabs by conventional mechanical fasteners 259c such as by screws or rivets. The interior surface of the two clamp halves may be concave and have ridges or barbs to bite into the sheath of the telecommunication cables to further securely grip the telecommunications cable when it is installed in the inlet device. In addition a spacer 260 may be positioned between the cables 50 disposed in the clamping nut to facilitate securing multiple cables with in the clamping nut. Spacer 260 can be a formed plastic part having contoured channels that mate with the cables to be inserted through the sealing member. Alternatively, spacer 260 can be a strip of foam material that is wrapped around the cables.

The first end of the housing may reside inside a telecommunication enclosure when the inlet device has been fully inserted into a port of a telecommunication enclosure and held in the port of the telecommunication enclosure by a securing mechanism. The second end of the housing may be located within the port of the telecommunication enclosure when the inlet device has been fully inserted into a port of a telecommunication enclosure. Alternatively, the second end of the tubular body may extend completely through the port of the telecommunication enclosure.

The securing mechanism 220 can be a latching fork 222 that fits within a groove 246 in the surface of housing 210 of inlet device 200, as shown in Figs. 3A and 3B, or it can be an integrally formed securing mechanism as described in International Patent Publication No. WO 2009/126411.

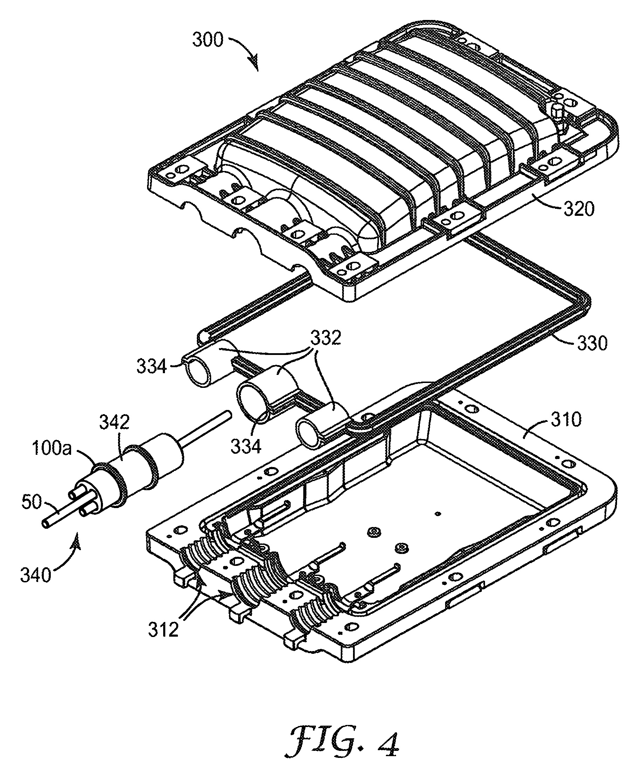

In an alternative aspect, sealing member 100a can be used for consistently and reliably bundling multiple cables for placement into a single entry port 312 of a telecommunication enclosure 300 is illustrated in Fig. 4. Enclosure 300 can include a separable base 310 and cover, defining entry ports 312. Entry ports 312 allow passage of a single cable, or multiple cables in combination with sealing member 100a. In the exemplary Enclosure shown in Fig. 4, the enclosure 300 has three entry ports 312, but in other embodiments the enclosure can have one, two, or any other number entry ports as is desired for a particular enclosure. Although illustrated as completely separable in Fig. 4, in other embodiments, base 310 and cover 320 may be moveably engaged, as by a hinge or the like. In other embodiments, enclosure 300 may comprise any size or shape. In one embodiment, the enclosure comprises a building with the entry ports extending through a wall of the building. Alternatively, the enclosure may be an aerial terminal, an indoor or outdoor splice closure, an underground vault, or an optical network terminal.

A sealing gasket 330 is positioned between base 310 and cover 320 to form a seal against the ingress of moisture, dust, insects, and the like into enclosure 300 when the base and cover are joined together, as by locking bolts, clamping members, and so on. Gasket 330 can include entry port portions 332 that surround the circumference of each entry port 312, so as to maintain the continuity of the gasket and resulting seal around the periphery of the enclosure 300. In one embodiment, entry port portions 332 include longitudinal slits 334 extending therethrough. Slits 334 permit the entry port portion 332 of gasket 330 to be opened and a sealing device 340 to be laid therein. In other embodiments, where the material of gasket 330 is sufficiently resilient, slits 334 are not provided in entry port portions 332 of gasket 330, and sealing device 340 is simply inserted through entry port portion 332 by stretching entry port portion of the gasket.

Sealing device 340 can include an exemplary sealing member 100a surrounded by a comparatively hard or rigid exterior portion 342. The sealing member 100a is configured for sealing engagement with cables extending through the openings in the sealing member while the rigid exterior portion 342 is configured for sealing engagement with an entry port 312 of enclosure 300, and particularly configured for sealing engagement with gasket 330 lining an entry port 312. The rigid exterior portion 342 provides a rigid sealing surface for the soft, pliable material of gasket 330 when clamped in entry port 312 of enclosure 300. In an alternative aspect, sealing member 100a can be used as the sealing device without the rigid exterior portion.

Various modifications including extending the use of the exemplary sealing members to applications with copper telecommunication cables or copper coax cables, equivalent processes, as well as numerous structures to which the present invention may be applicable will be readily apparent to those of skill in the art to which the present invention is directed upon review of the present specification.

## Claims

1. A sealing member (100a, 100b, 100c) comprising:
a body portion (105) including at least one opening (120) extending from a first end (122) of the sealing member to a second end (124) of the sealing member and
at least one plug (110a, 110b, 110c) formed integrally with the sealing member to block the at least one opening,
wherein the at least one plug extends from a surface of the body portion and
**characterized in that** the at least one plug is connected to the body portion by a web (130, 130b, 130f) within the at least one opening.

2. The sealing member of claim 1, comprising a plurality of openings (120) through the body portion (105).

3. The sealing member of claim 1, further comprising an unblocked opening (120) through the body portion (105).

4. The sealing member of claim 3, further comprising a cable (50) extending through the unblocked opening (120).

5. An inlet device (200) comprising a housing (210), the sealing member of claim 1 (100a) disposed at least partially within the housing and an external sealing member (245) disposed on the surface of the housing.

6. The inlet device of claim 5, further comprising a compression member (250) to compress the sealing member (100a) within the housing to provide a sealing engagement with a cable (50) passing through the opening in the sealing member

7. The inlet device of claim 5, further comprising a securing mechanism (220) to lock the inlet device in a port of a telecommunication enclosure.

8. An assembly, comprising an enclosure (300) wherein the enclosure includes a cover (320) and a base (310) which is engagable with the cover and wherein the enclosure has an entry port (312) lined with a pliable gasket (330) and the sealing member of claim 1 sealingly engaged with the pliable gasket lining the entry port of the enclosure.

9. The assembly of claim 8, further comprising a rigid exterior (332) portion disposed around an external surface of the sealing member and between the pliable gasket and the sealing member.

## Patentansprüche

1. Dichtelement (100a, 100b, 100c), umfassend:
einen Körperteil (105), der mindestens eine Öffnung (120) umfasst, die sich von einem ersten Ende (122) des Dichtelements zu einem zweiten Ende (124) des Dichtelements erstreckt, und
mindestens einen Stopfen (110a, 110b, 110c), der integral mit dem Dichtelement ausgebildet ist, um die mindestens eine Öffnung zu blockieren,
wobei sich der mindestens eine Stopfen von einer Oberfläche des Körperteils aus erstreckt, und
**dadurch gekennzeichnet, dass** der mindestens eine Stopfen mit dem Körperteil durch eine Lage (130, 130b, 130f) innerhalb der mindestens einen Öffnung verbunden ist.

2. Dichtelement nach Anspruch 1, umfassend eine Vielzahl von Öffnungen (120) durch den Körperteil (105) hindurch.

3. Dichtelement nach Anspruch 1, ferner umfassend eine nicht blockierte Öffnung (120) durch den Körperteil (105) hindurch.

4. Dichtelement nach Anspruch 3, ferner umfassend ein Kabel (50), das sich durch die nicht blockierte Öffnung (120) erstreckt.

5. Einlassvorrichtung (200), umfassend ein Gehäuse (210), das Dichtelement nach Anspruch 1 (100a), welches mindestens teilweise innerhalb des Gehäuses angeordnet ist, und ein äußeres Dichtelement (245), das auf der Oberfläche des Gehäuses angeordnet ist.

6. Einlassvorrichtung nach Anspruch 5, ferner umfassend ein Kompressionselement (250), um das Dichtelement (100a) innerhalb des Gehäuses zu komprimieren, um für einen Dichtungseingriff mit einem Kabel (50) zu sorgen, das durch die Öffnung in dem Dichtelement verläuft.

7. Einlassvorrichtung nach Anspruch 5, ferner umfassend einen Befestigungsmechanismus (220), um die Einlassvorrichtung in einer Öffnung eines Telekommunikationsgehäuses zu verriegeln.

8. Anordnung, umfassend ein Gehäuse (300), wobei das Gehäuse eine Abdeckung (320) und eine Basis (310), die mit der Abdeckung in Eingriff gebracht werden kann, umfasst, und wobei das Gehäuse eine Eintrittsöffnung (312) aufweist, die mit einer biegsamen Dichtung (330) ausgekleidet ist, und sich das Dichtelement nach Anspruch 1 dichtend mit der biegsamen Dichtung, welche die Eintrittsöffnung des Gehäuses auskleidet, in Eingriff befindet.

9. Anordnung nach Anspruch 8, ferner umfassend einen steifen Außenabschnitt (332), der um eine Außenoberfläche des Dichtelements herum und zwischen der biegsamen Dichtung und dem Dichtelement angeordnet ist.

## Revendications

1. Élément d'étanchéité (100a, 100b, 100c) comprenant :
une partie de corps (105) incluant au moins une ouverture (120) s'étendant depuis une première extrémité (122) de l'élément d'étanchéité jusqu'à une deuxième extrémité (124) de l'élément d'étanchéité et
au moins un bouchon (110a, 110b, 110c) formé de manière solidaire à l'élément d'étanchéité pour bloquer ladite au moins une ouverture,
dans lequel ledit au moins un bouchon s'étend à partir d'une surface de la partie de corps et
**caractérisé en ce que** ledit au moins un bouchon est relié à la partie de corps par une bande (130, 130b, 130f) au sein de ladite au moins une ouverture.

2. Élément d'étanchéité selon la revendication 1, comprenant une pluralité d'ouvertures (120) à travers la partie de corps (105).

3. Élément d'étanchéité selon la revendication 1, comprenant en outre une ouverture non bloquée (120) à travers la partie de corps (105).

4. Élément d'étanchéité selon la revendication 3, comprenant en outre un câble (50) s'étendant à travers l'ouverture non bloquée (120).

5. Dispositif d'entrée (200) comprenant un logement (210), l'élément d'étanchéité selon la revendication 1 (100a) disposé au moins partiellement au sein du logement et un élément d'étanchéité externe (245) disposé sur la surface du logement.

6. Dispositif d'entrée selon la revendication 5, comprenant en outre un élément de compression (250) pour compresser l'élément d'étanchéité (100a) au sein du logement pour fournir une mise en prise étanche avec un câble (50) passant à travers l'ouverture dans l'élément d'étanchéité

7. Dispositif d'entrée selon la revendication 5, comprenant en outre un mécanisme de fixation (220) pour verrouiller le dispositif d'entrée dans un orifice d'une enceinte de télécommunication.

8. Ensemble, comprenant une enceinte (300) dans lequel l'enceinte inclut un couvercle (320) et une base (310) qui peut venir en prise avec le couvercle et dans lequel l'enceinte a un orifice d'entrée (312) revêtu d'un joint d'étanchéité pliable (330) et l'élément d'étanchéité selon la revendication 1 en prise étanche avec le joint d'étanchéité pliable revêtant l'orifice d'entrée de l'enceinte.

9. Ensemble selon la revendication 8, comprenant en outre une partie extérieure rigide (332) disposée autour d'une surface externe de l'élément d'étanchéité et entre le joint d'étanchéité pliable et l'élément d'étanchéité.
